(19) Europäisches Patentamt
European Patent Office
Office européen des brevets

(11) Publication number: **0 106 519**
**A1**

(12) # EUROPEAN PATENT APPLICATION

(21) Application number: 83305303.6

(22) Date of filing: 12.09.83

(51) Int. Cl.³: C 08 G 61/08
C 08 F 295/00

(30) Priority: 13.09.82 GB 8226080

(43) Date of publication of application:
25.04.84 Bulletin 84/17

(84) Designated Contracting States:
DE FR GB IT NL

(71) Applicant: NATIONAL RESEARCH DEVELOPMENT CORPORATION
101 Newington Causeway
London SE1 6BU(GB)

(72) Inventor: Amass, Allan John
90 Foley Road West
Streetly West Midlands B74 3NP(GB)

(74) Representative: Colmer, Stephen Gary
Patent Department National Research Development Corporation 101 Newington Causeway
London SE1 6BU(GB)

(54) **Block copolymers.**

(57) An olefin metathesis catalyst composition which comprises:
(a) a transition metal compound and
(b) an organometallic compound which comprises (i) one or two metal atoms and (ii) chemically bonded at least one of the metal atoms, at least one homo- or co-poly (substituted or unsubstituted olefinically unsaturated hydrocarbon).

EP 0 106 519 A1

Croydon Printing Company Ltd.

# BLOCK COPOLYMERS

This invention relates to block copolymers. More particularly, this invention relates to block copolymers prepared by olefin metathesis; to blends thereof; and to olefin metathesis catalyst compositions.

The metathesis of substituted or unsubstituted olefinically unsaturated hydrocarbons is a catalytically induced reaction wherein such compounds undergo bond reorganisation, resulting in a redistribution of the Π-bonded alkylidene moieties. Before the present invention, however, there had been no disclosure of the preparation of block copolymers in this manner.

According, therefore, to one aspect of the present invention, there is provided an olefin metathesis catalyst composition which comprises;

(a) a t ansition metal compound and

(b) an organometallic compound which comprises (i) one or two metal atoms and (ii) chemically bonded to at least one of the metal atoms, at least one homo- or co-poly (substituted or unsubstituted olefinically unsaturated hydrocarbon).

Suitably, component (a) of the catalyst composition comprises a group IVA, VA, VIA or VIIA transition metal compound. Suitably, component (a) of the catalyst composition comprises a compound of a transition metal of the second or third row. Preferably, component (a) comprises a compound of W, Mo, Ta and Re. Preferably, component (a) comprises a compound in the (O), (V) or (VI) oxidation state. It is particularly preferred that component (a) of the catalyst composition comprises a Mo(V) or W(VI) halide or oxyhalide, though $W(CO)_6$ and $\Pi$-$C_5H_5W(CO)_4Cl$ may be used.

Component (a) of the catalyst composition may be prepared in a manner known *per se*. For example, component (a) may be prepared by reacting a Mo or W compound in the (O), (I) or (II) oxidation state with a halogenating agent. Examples of suitable halogenating agents include $PF_5$, $PCl_5$, $PBr_5$, $POCl_3$, $PCl_3$, $AlCl_3$, $AlBr_3$, $AlI_3$, $BF_3$, $BCl_3$, $SiCl_4$, $SnCl_4$, $TiCl_4$, $VOCl_3$ or $VCl_4$.

The or each metal atom in component (b) may be, for example, a Group IA metal such as lithium, sodium or potassium; magnesium; a Group IIB metal such as zinc, cadmium or mercury; or a Group IIIB metal such as aluminium or gallium. Where two metal atoms are present these may be the same or different. It is found that the yields of block copolymers of the present invention are enhanced if the organometallic bond has some covalent character; accordingly, it is preferred that the or each metal atom is lithium, magnesium, zinc, cadmium, mercury or aluminium, with lithium being particularly preferred.

Component (b) may, in order to enhance the blockiness of the resulting copolymer, comprise two metal atoms. In a preferred embodiment, at least one homo- or co-poly (substituted or unsubstituted olefinically unsaturated hydrocarbon) is chemically bonded to both metal atoms. Examples include the reaction products of metal-containing anionic polymerisation-initiating compounds, for example, αω-bis-lithio alkylenes; bis-lithio, bis-vinylarylenes; and bis-lithio fused aromatic carbocyclics, such as 1,4-dilithiobutylene, bis-lithiodivinylbenzene, bis-lithiodivinyl naphthalene and bis-lithio naphthalene, respectively, with at least one anionically polymerisable monomer, such as styrene or α-methylstyrene, optionally with subsequent metalation. The solubility of such initiating compounds in reaction media is, however, not high.

Component (b) may comprise a single metal atom; analogues of the above metal-containing initiating compounds, especially butyl lithium, 1,1-diphenylhexyl lithium, or phenyl lithium, may be used to prepare them.

Suitably, component (b) of the catalyst composition, the cocatalyst, comprises a living polymer. By "living polymer" is meant herein any organometallic compound comprising a non-terminated polymeric moiety and which, under appropriate anionic polymerisation conditions, will further polymerise when contacted with the or at least one monomer from which the polymeric moiety is formed. Examples include the products formed by reacting a

Grignard reagent or a Group IA organometallic with at least one appropriate monomer under non-terminating anionic polymerisation conditions.

The polymeric moiety of the cocatalyst may be homopolymeric or random or block copolymeric and comprises a segment, the B segment, of the block copolymer of this invention as will be described later. Preferably the polymeric moiety comprises a backbone of more than 20 carbon atoms; for example, from 25 to 200 carbon atoms or more, preferably from 30 to 150 carbon atoms.

Suitably, the molar ratio of (a) to (b) is from 2:1 to 1:10, preferably from 1:1 to 1:5.

In accordance with a further aspect of this invention, there is provided a process for the preparation of a block copolymer by olefin metathesis, which process comprises contacting at least one mono- or polycyclic substituted or unsubstituted mono- or polyolefinically unsaturated compound with a catalyst composition as herein defined. The metathesis may be effected at a temperature from -30°C to +50°C, preferably -20°C to +40°C. The metathesis may be effected at atmospheric or autogenous pressure, preferably atmospheric pressure. The solvent in which the olefin metathesis is effected is preferably substantially anhydrous, and free from any other compound which impairs the catalyst activity. Examples of such other compounds include oxidants such as oxygen; carbon dioxide; hydrogen halides; hydrogen chalcogenides; and conjugated olefinically unsaturated compounds such as cyclopentadiene. The solvents themselves are preferably aprotic. Examples include aromatic, aliphatic and alicyclic hydrocarbons such as toluene, benzene, n-hexane and cyclohexane, preferably toluene.

It is found that enhanced yields and greater catalyst efficiency are obtained if the mono- or polycyclic substituted or unsubstituted mono- or poly- olefinically unsaturated compound is first added to component (b) and thereafter component (b) is added to form the catalyst composition of the invention. Typically, component (b) is added from 1 to 10, for example

from 2 to 5 minutes, after the mono- or polycyclic substituted or unsubstituted mono-or poly-olefinically unsaturated compound is added to component (a).

This invention also provides a block copolymer comprising A and B blocks wherein:

at least one A block comprises the olefin metathesis polymerisation product of a mono- or polycyclic substituted or unsubstituted mono- or polyolefinically unsaturated compound; and

at least one B block comprises the polymeric moiety of component (b) of the catalyst composition of the invention.

Suitable monocyclic compounds for preparing the A block moiety include substituted or unsubstituted mono-olefinically unsaturated compounds; for example those of the formula:

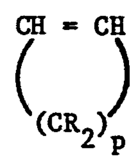

wherein:

p represents an integer, suitably from 2 to 10 with the exception of 4; and

R represents a hydrogen or halogen atom or a lower unsubstituted or halo-substituted alkyl group, with the proviso that not all the 2pR groups need be the same. Examples include cyclopentene and 3-methyl cyclobutene. The resulting A block moiety has the formula:

$$[-(CR_2)_p-CH=CH-]_n$$

wherein:

p and R are herein defined, and n is a number related to the average molecular weight of the A block.

It is desirable the $R_1$ represent hydrogen atoms; it is preferred that p is 3: such polypentenamer A blocks confer good elastomeric properties on the resulting block copolymers. Cyclohexene cannot be polymerised by olefin metathesis.

Mixtures of such monocyclic mono-olefinically unsaturated compounds may be used.

Other suitable monocyclic compounds for preparing the A block moiety include the corresponding compounds having at least two non-conjugated olefinic double bonds, such as 1,5-cyclooctadiene, or norbornadiene. Incorpation of at least a portion, preferably a minor portion, of such compounds into the reagent feed can increase the blockiness of the resulting block copolymer.

Mixtures of such monocyclic polyolefinically unsaturated compounds may be used.

Suitable polycyclic compounds for preparing the A block moiety include substituted or unsubstituted mono- or poly-olefinically unsaturated compounds; for example those bicyclic compounds of the formula:

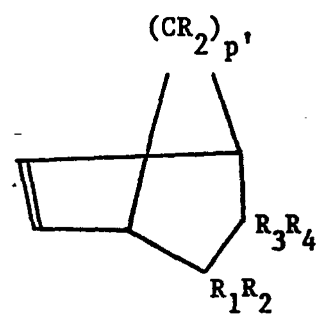

wherein:

p' represents an integer from 1 to 4, preferably 1; R is as herein defined; and

$R_1$, $R_2$, $R_3$ and $R_4$, which may be the same or different, may each assume any of the values of R with the proviso that $R_1$ and $R_3$ may also form an olefinic carbon-carbon bond. Examples include norbornene and norbornadiene.

Mixtures of such polycyclic unsaturated compounds may be used.

Suitable compounds for preparing the B block moiety include all monomers that will undergo an anionic, non-terminating polymerisation. Examples include substituted or unsubstituted aryl or alkaryl ethylenes such as styrene, vinyl toluene and α-methyl styrene; lower alkyl (meth)acrylate esters such as methyl methacrylate; other olefinically unsaturated compounds where the double bond is conjugated with a (-I) or (-M) group for example acrylonitrile and unsaturated aldehydes such as acrolein; cyclic ethers and lactams such as ethylene oxide and caprolactam.

Mixtures of such compounds can be used in the preparation of the cocatalyst.

The following Examples illustrate the invention:

Purification of Materials

The purification of cyclopentene, toluene and $WCl_6$ was effected in the manner described in Europ. Polym. J, 14 817 (1978). Styrene (200 ml) was washed three times with 200 ml of 2.5 M NaOH to remove t-butyl catechol and then three times with distilled water. The monomer was then dried by standing over alumina activated at 400°C for four hours and was subsequently distilled under high vacuum into a flask containing pentyl magnesium bromide, where it was stored until required. Lithium butyl was stored as 1.5 M solution in hexane obtained from Cambrian Chemical Company Limited.

EXAMPLE 1

Preparation

20 ml of dry styrene and 50 ml of dry toluene were distilled under high vacuum into a 100 ml flask fitted with a 'suba-seal' and greaseless tap. 0.25 ml of 1.5 M LiBu solution was then added through the suba-seal and the contents of the flask were maintained at 60°C for 12 hours. When the styrene had polymerised to provide a living polystyryl lithium solution a solution of 20 ml of cyclopentene in 20 ml of toluene was prepared, to which was added 4.7 ml of 0.04 M solution of $WCl_6$ in toluene. The living polystyryl lithium solution was next added to the mixture of $WCl_6$ and cyclopentene so that the overall W:Li:cyclopentene molar ratio was 1:2:1000. The polymerisation of cyclopentene was then allowed to proceed for 4 hours at 25°C whereupon it was terminated by addition of a trace of methanol to the reaction mixture. The contents of the flask were thereafter added slowly to 500 ml of hexane (polystyrene is insoluble and polypentenamer soluble in hexane at 25°C) and the precipitate was separated. The filtrate from the above was concentrated and then added to 500 ml of methanol to give a further precipitate. The precipitates were individually purified twice by precipitation in methanol from chloroform solutions.

Analysis

Thin films of the precipitates so produced were cast from chloroform solutions and the infra-red spectra were recorded using a Perkin-Elmer infra-red spectrophotometer. The appearance of peaks at 10.35 μ and 13.5 μ indicated the presence of trans and cis carbon double bonds and peaks at 6.2, 6.7, 13.3 and 14.4 μ were characteristic of polystyrene.

EXAMPLE 2

Preparation

20 ml of dry styrene were polymerised at 50°C for 12 hours in 50 ml dry toluene using 0.25 ml of 1.5 molar LiBu as initiator. This solution of living polymer was added to 20 ml of cyclopentene that contained $2 \times 10^{-4}$ mole $WCl_6$. The polymer produced after polymerising for 4 hours at 25°C was then separated and purified as described above into the following fractions:

| | | |
|---|---|---|
| hexane insoluble fraction | = | 15.8 g |
| methanol insoluble fraction | = | 8.3 g |
| overall yield | = | 77% |

The molar ratio of W:Li:CP:St in the reaction was 1:2:1000:1000.

Analysis of hexane insoluble fraction

Infra-red analysis

The spectrum shown absorbances typical of polystyrene at 6.2 μ and 6.7 μ, and also the absorbance typical of the trans carbon-carbon double bond at 10.35 μ. It would therefore appear that the product of the reaction contains both polypentenamer and polystyrene.

Elemental analysis

The products of the reaction were analysed for their carbon and hydrogen contents from which the composition of the material could be determined. If x is the percentage by weight of styrene in the product,

$$x = \frac{C-88.24}{0.0407}$$

where C is the weight percentage of carbon in the polymer and the percentage by weight of pentenamer is 100-x = 2268-24.6 C. Elemental analysis of the material that was insoluble in n-hexane

showed that the percentage weights of carbon in the material was 91.1% and hydrogen was 8.9%. Accordingly the percentage by weight of styrene in the material was 70% and that of polypentenamer was 30%, so that the molar ratio of styrene:cyclopentene in the copolymer was approximately 3:2.

Analysis of hexane soluble fraction

Infra-red analysis

The spectrum shows absorbances typical of both polystyrene and polypentenamer which suggests that the product is a copolymer of polystyrene and polypentenamer.

Elemental analysis

Elemental analysis of the hexane soluble material showed that the carbon and hydrogen contents were 89.9% and 10.1% respectively. From the weights of polystyrene and polypentenamer in the polymer it can be estimated that the molar ratio of styrene:cyclopentene was approximately 2:3.

## EXAMPLE 3

The preparation used in Example 2 was repeated except that the cyclopentene was allowed to pre-react with the $WCl_6$ for 6 minutes before adding the living polymer solution to it. Polymerisation was then allowed to proceed for 1.5 hours.

Analysis

A sample of the polymer so produced was then analysed in a gel permeation chromatograph fitted with both refractive index and UV detectors. In the sole accompanying figure, the weight percentage of the sample is plotted, as ordinate, against molecular weight, as abscissa (log scale). The bimodal molecular weight distribution can clearly be seen with approximately 67 wt% of the sample being of the lower molecular weight peak. A comparison with Example 2 indicates that in this sample the molar ratio of styrene:cyclopentene is about 3:2. Approximately 33 wt% of the sample is of the higher molecular weight peak and, again, a comparison with Example 2 indicates that in this sample the molar ratio of styrene:cyclopentene is about 2:3.

Conclusive evidence for the formation of a block copolymer of polystyrene and polypentenamer is obtained from a comparison of the chromatograms obtained on this sample using:

(i) the refractive index detector; and

(ii) the UV detector.

The refractive index detector responds to the presence of both polystyrene and polypentenamer blocks in the sample, whereas the UV detector responds only to the presence of polystyrene blocks in a particular polymer chain. By separate experiments it was established that the molecular weight of the polystyrene block was 8000. The UV detector conclusively shows that polystyrene blocks were present in polymer chains that had very high molecular weights, sometimes in excess of 500,000. Block copolymer formation must have taken place.

In the separate experiments, it was found that the living polymer comprised polystyryl chains having a molecular weight of about 8,000. In the block copolymer the lower mode molecular weight is about 12,000 while the higher mode molecular weight is about 500,000. While it is probable that block polymer in the lower molecular weight peak comprises only one polystyryl segment, it is clear that the block polymer in the higher molecular weight peak must comprise a plurality of polystyryl segments.

CLAIMS

1. An olefin metathesis catalyst composition which comprises:

(a) a transition metal compound and

(b) an organometallic compound which comprises (i) one or two metal atoms and (ii) chemically bonded at least one of the metal atoms, at least one homo- or co-poly (substituted or unsubstituted olefinically unsaturated hydrocarbon).

2. A catalyst composition according to Claim 1 wherein (a) comprises a group IVA, VA, VIA or VIIA transition metal compound.

3. A catalyst composition according to Claim 1 or 2 wherein (a) comprises a compound of a transition metal of the second or third row.

4. A catalyst composition according to Claim 3 wherein (a) comprises a compound of W, Mo, Ta and Re.

5. A catalyst composition according to any preceding claim wherein (a) comprises a compound in the (O), (V) or (VI) oxidation state.

6. A catalyst composition according to Claim 5 wherein (a) comprises a Mo(V) or W(VI) halide or oxyhalide.

7. A catalyst composition according to Claim 6 prepared by reacting a Mo or W compound in the (O), (I) or (II) oxidation state with a halogenating agent.

8. A catalyst composition according to Claim 7 wherein the halogenating agent comprises $PF_5$, $PCl_5$, $PBr_5$, $POCl_3$, $PCl_3$, $AlCl_3$, $AlBr_3$, $AlI_3$, $BF_3$, $BCl_3$, $SiCl_4$, $SnCl_4$, $TiCl_4$, $VOCl_3$ or $VCl_4$.

9. A catalyst composition according to any preceding claim wherein (b) comprises a Grignard reagent or an organoaluminium, zinc, cadmium, tin or mercury.

10. A catalyst composition according to Claim 9 wherein (b) comprises a living polymer.

11. A catalyst composition according to any preceding claim wherein the living polymer comprises a Group IA organometallic compound comprising a polymeric moiety.

12. A catalyst composition according to any preceding claim wherein the molar ratio (a):(b) is from 2:1 to 1:10.

13. A catalyst composition according to Claim 12 wherein the molar ratio (a):(b) is from 1:1 to 1:5.

14. A process for the preparation of a block copolymer by olefin metathesis, which process comprises contacting at least one mono- or polycyclic substituted or unsubstituted mono- or polyolefinically unsaturated compound with a catalyst composition according to any preceding claim.

15. A process according to Claim 14 wherein the metathesis is effected at a temperature from -20$^{o}$C to 40$^{o}$C.

16. A process according to Claim 14 or 15 which is effected in an aprotic solvent.

17. A process according to Claim 16 wherein the solvent is anhydrous.

18. A process according to Claim 16 or 17 wherein the solvent comprises a hydrocarbon.

19. A block copolymer comprising A and B blocks wherein:-

at least one A block comprises the olefin metathesis polymerisation product of a mono- or polycyclic subsituted or unsubstituted mono- or polyolefinically unsaturated compound; and

at least one B block comprises the polymeric moiety of component (b) of the catalyst composition according to any of Claims 1 to 13.

20. A block copolymer according to Claim 19 wherein the unsaturated compound is a mono- or bicyclic subsituted or unsubstituted mono-or diolefinically unsaturated compound.

21. A block copolymer according to Claim 20 wherein the unsaturated compound is monocyclic.

22. A block copolymer according to Claim 21 comprising a linear alternating copolymeric block A wherein the substitution and/or olefinic unsaturation is asymmetrically distributed about the ring.

23. A block copolymer according to any of Claims 19 to 22.

1/1

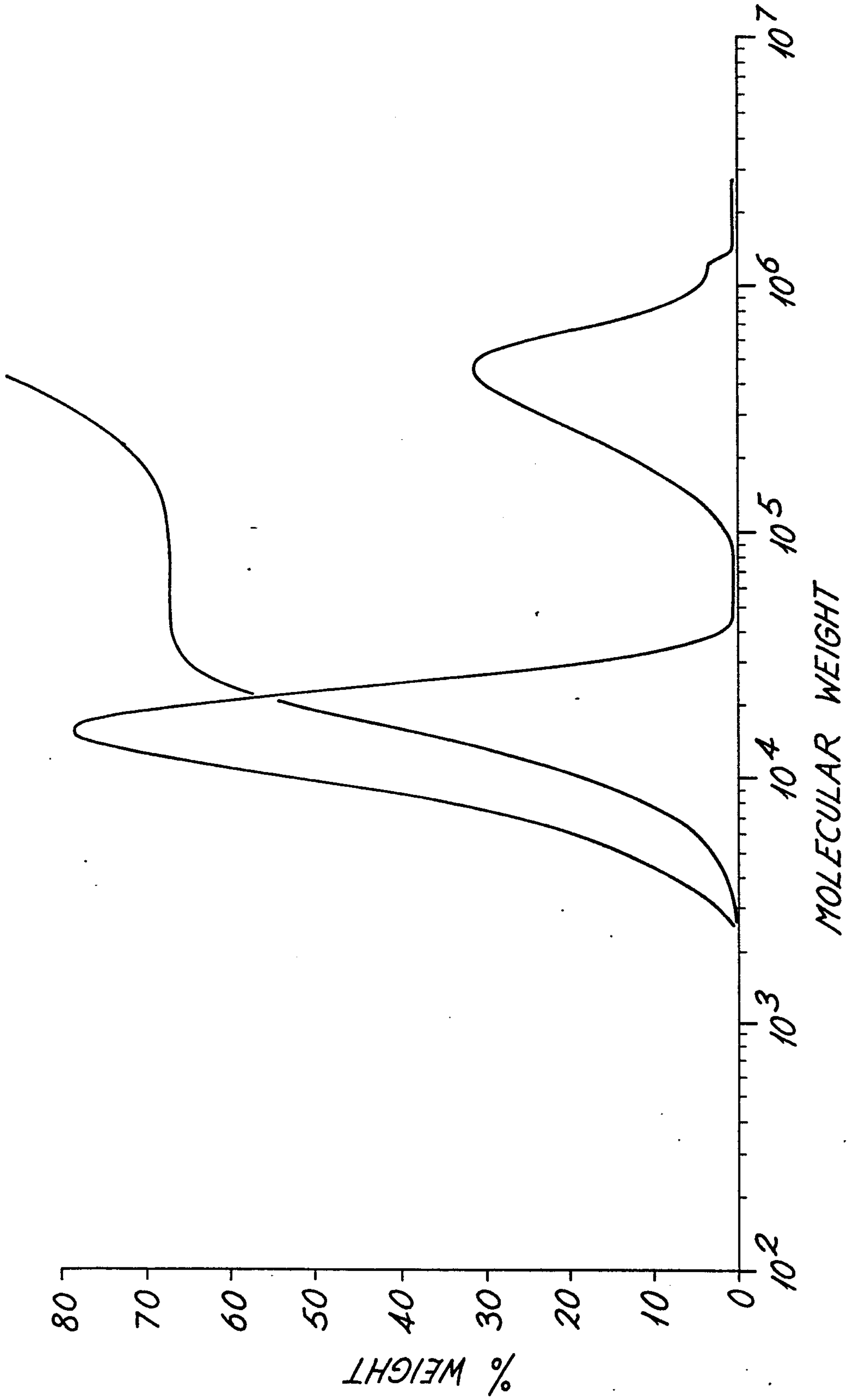
% WEIGHT
80
70
60
50
40
30
20
10
0
MOLECULAR WEIGHT
$10^2$
$10^3$
$10^4$
$10^5$
$10^6$
$10^7$

European Patent Office

0106519

Application number

EP 83 30 5303

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-3 860 675 (GOTTFRIED PAMPUS et al.) * Claims * | 1 | C 08 G 61/08<br>C 08 F 295/00 |
| A | FR-A-2 271 242 (BAYER) * Claims * | 1 | |
| A | FR-A-2 271 243 (BAYER) * Claims * | 1 | |
| A | US-A-3 891 816 (KENNETH W. SCOTT et al.) * Claims * | 1 | |
| A | US-A-3 851 015 (ELIAS AGOURI et al.) * Claims * | 1 | TECHNICAL FIELDS SEARCHED (Int. Cl. 3) |
| A | DE-A-2 649 750 (SOCIETE NATIONALE ELF AQUITAINE) * Claims * | 1 | C 08 G<br>C 08 F |

The present search report has been drawn up for all claims

| Place of search | Date of completion of the search | Examiner |
|---|---|---|
| THE HAGUE | 30-12-1983 | MALHERBE Y.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82